# EUROPÄISCHE PATENTSCHRIFT

(11) **EP 4 270 176 B1**
(45) Veröffentlichungstag und Bekanntmachung des Hinweises auf die Patenterteilung: **16.10.2024**
(21) Anmeldenummer: 22169925.9
(22) Anmeldetag: 26.04.2022
(51) Int. Cl.: G06F 8/34

(54) **VERFAHREN ZUR ERZEUGUNG VON QUELLCODE**
METHOD FOR GENERATING SOURCE CODE
PROCÉDÉ DE GÉNÉRATION DE CODE SOURCE

(43) Veröffentlichungstag der Anmeldung: 01.11.2023
(73) Patentinhaber: dSPACE GmbH, 33102 Paderborn (DE)
(72) Erfinder: Harder, Sven, 33102 Paderborn (DE)

(56) Entgegenhaltungen:
- US-A1- 2006 136 181
- AHO A V ET AL: "Compiler - Principles, Techniques, and Tools", 1 January 1986, COMPILERS. PRINCIPLES, TECHNIQUES, AND TOOLS, READING, ADDISON-WESLEY PUBLISHING CO, US, PAGE(S) COMPLETE48, XP002200775
- YI GUI ET AL: "Cross-Language Binary-Source Code Matching with Intermediate Representations", ARXIV.ORG, CORNELL UNIVERSITY LIBRARY, 201 OLIN LIBRARY CORNELL UNIVERSITY ITHACA, NY 14853, 19 January 2022 (2022-01-19), XP091153226

## Beschreibung

Die Erfindung betrifft die Erzeugung von ausführbarem Code aus einem Blockdiagramm, insbesondere für die Programmierung von Steuergeräten.

Steuergeräte werden in einer Vielzahl von Anwendungen eingesetzt, um physikalische Größen eines Prozesses zu erfassen und/oder mittels angeschlossener Aktuatoren auf einen Prozess einzuwirken; beispielsweise kann es sich um eine Antiblockierregelung eines Bremsvorgangs handeln. Die das dynamische Verhalten des Prozesses bestimmenden Zeitkonstanten bedingen häufig Zykluszeiten von 1 ms oder kürzer, so dass in der Regel eine Echtzeitfähigkeit des Steuergeräts erforderlich ist. Aus Kostengründen weisen Steuergeräte häufig Mikrocontroller mit geringem Speicher und beschränkter Rechenleistung auf, weshalb der Größe und Effizienz des ausführbaren Codes eine große Bedeutung zukommt.

Um den Entwurf von Steuergeräten zu beschleunigen, werden Kontrollstrategien häufig anhand von Modellen in einer Rechenumgebung wie MATLAB/Simulink entwickelt. Somit können Prozess und/oder Regler bzw. allgemein das Verhalten des Steuergeräts zunächst simuliert und das Vorliegen von gewünschten Eigenschaften überprüft werden. Bei den Modellen kann es sich insbesondere um Blockdiagramme handeln, welche Blöcke umfassen, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf mindestens ein Eingangssignal aus dem letzten Schritt eine oder mehrere Operationen anwenden, um mindestens ein Ausgangssignal des aktuellen Schritts zu erzeugen. Aus den Modellen kann mittels eines Codegenerators direkt Quellcode für die Programmierung des Steuergeräts erzeugt werden.

Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Codegenerator für die Erzeugung von Quellcode in Produktionsqualität bekannt. Hierbei kann der erzeugte Produktionscode durch eine zusätzliche Annotation der Blöcke bzw. Blockvariablen angepasst werden.

Aus der US 2006/0136181 A1 sind ein Verfahren und ein System zur Optimierung mindestens eines Parameters eines physikalischen Systems bekannt, welches mittels eines schematischen Blockdiagramms beschrieben ist. Das Verfahren umfasst die Erzeugung eines differenzierten Blockdiagramms.

In dem Buch "Compilers - Principles, Techniques and Tools" von Aho et al., Addison-Wesley, Reading, 1986, wird eine Einführung in die Kompilierung von Quellcode am Beispiel der Sprachen C und Pascal gegeben. Es werden die verschiedenen Phasen der Kompilierung und das Prinzip lexikalischer Scopes in textuellen Programmiersprachen beschrieben.

Die Entwicklungspartnerschaft AUTOSAR (AUTomotive Open System ARchitecture) hat seit etlichen Jahren ein Software-Framework für die Entwicklung von Steuergerätesoftware definiert (detaillierte Informationen sind unter www.autosar.org zu finden). Vor der Implementierung der eigentlichen Steuerungsstrategie oder des gewünschten Verhaltens wird eine Architektur der Software festgelegt. Beispielsweise kann die Softwarearchitektur dem AUTOSAR Classic Platform Standard Version 4.3.0 vom 30.11.2016 entsprechen. Die Architektur umfasst Softwarekomponenten, Unterkomponenten wie Runnables und Schnittstellen von Softwarekomponenten. Messaging zwischen verschiedenen Softwarekomponenten erfolgt über den virtuellen Funktionsbus einer Laufzeitumgebung (RTE), die anhand der definierten Architektur passend für das konkrete Steuergerät erzeugt wird. Eine auf diese Weise erzeugte Steuergerätesoftware ist effizient, aber unflexibel - für eine Anpassung müsste die Laufzeitumgebung neu erzeugt und der Binärcode auf dem Steuergerät hinterlegt werden.

Durch die zunehmende Vernetzung von Steuergeräten in modernen Fahrzeugen, die damit einhergehende höhere Kommunikation zwischen den beteiligten Komponenten, sowie die Möglichkeit zur Einführung neuer Komponenten durch OTA(Over-the-Air)-Updates sind neue, flexible Kommunikationsarchitekturen zur effizienten Kommunikation im Fahrzeug erforderlich. Hierfür wurde die Adaptive AUTOSAR Plattform entwickelt, die basierend auf einem Betriebssystem wie Linux eine Middleware mit modernen Schnittstellen anbietet. Die beispielsweise in AUTOSAR Adaptive Release 19.03 vom 29.03.2019 definierte AUTOSAR Runtime for Adaptive Applications unterstützt durch moderne Kommunikationsarchitekturen höchstdynamische Kommunikation in Systemen aus vernetzten Steuergeräten. So bietet der funktionale Cluster ara: :com eine servicebasierte Architektur an, um Kommunikationsbeziehungen zu erlauben, welche erst zur Laufzeit eines Steuergerätes entstehen bzw. festgelegt werden.

Bei größeren Entwicklungsprojekten werden unterschiedliche Bereiche der Entwicklung häufig von mehreren Personen durchgeführt, die auch in verschiedenen Unternehmen tätig sein können. So können mehrere Funktionsentwickler einzelne Teile des Modells erstellen und verbessern. Ein einmal erstelltes Teilmodell kann auch für verschiedene Projekte eingesetzt und in der Funktionalität angepasst werden. Soll ein für Classic AUTOSAR erstelltes Teilmodell in der Adaptive AUTOSAR Plattform eingesetzt werden, erfordert dies nach dem Stand der Technik aber weitreichende Anpassungen, so dass effektiv zwei unabhängige zu pflegende Modelle entstehen.

Vor diesem Hintergrund ist es eine Aufgabe der vorliegenden Erfindung, den Stand der Technik weiterzuentwickeln und insbesondere eine universelle Verwendung von Teilmodellen in verschiedenen Projekten zu erleichtern.

Diese Aufgabe wird durch ein Verfahren zum Erzeugen von Quellcode nach Anspruch 1, ein Computerprogrammprodukt nach Anspruch 11 und ein Computersystem nach Anspruch 12 gelöst. Vorteilhafte Weiterbildungen sind Gegenstand der abhängigen Unteransprüche.

Es wird also ein Verfahren zum Erzeugen von Quellcode aus mindestens einem hierarchischen Block eines Blockdiagramms bereitgestellt, wobei ein hierarchischer Block eine Vielzahl von untergeordneten Blöcken umfasst, welche Berechnungen des hierarchischen Blocks implementieren, wobei der hierarchische Block mindestens einen Kommunikationsblock umfasst, der Daten mit einem Block außerhalb des hierarchischen Blocks austauscht, und wobei der mindestens eine Kommunikationsblock mit einem Verweis auf ein Datenobjekt versehen ist. Erfindungsgemäß umfasst das Verfahren die Schritte
Einlesen des Blockdiagramms,
Ersetzen des Verweises durch das referenzierte Datenobjekt,
Ermitteln von mindestens einer Codegenerierungseinstellung anhand des referenzierten Datenobjekts,
Erzeugen einer Zwischendarstellung,
Durchführen mindestens einer Optimierung auf der Zwischendarstellung, und Übersetzen der Zwischendarstellung in Quellcode.

Über eine Signalverbindung können Daten bzw. Signale übertragen werden; hierbei gibt ein erster Block einen Wert oder je nach Definition mehrere zusammengehörige Werte aus und ein zweiter Block empfängt diese und berücksichtigt sie bei der Ermittlung von einem oder mehreren zusammengehörigen Ausgabewerten des zweiten Blocks. Signale können skalare Variablen und/oder strukturierte Datentypen wie Arrays und Structs enthalten, wie dies beispielsweise bei einem Bus der Fall ist. Bei dem Kommunikationsblock kann es sich um einen Eingabeport oder einen Ausgabeport handeln; es kann sich auch um einen Block handeln, der eine Speichervariable bzw. den Lese- oder Schreibzugriff auf eine Speichervariable modelliert, wie einen DataStoreMemory-Block bzw. einen DataStoreWrite-Block oder einen DataStoreRead-Block.

Ein Verweis kann in Form eines Blockparameters des jeweiligen Blocks hinterlegt sein. Das Ersetzen des Verweises kann als ein Auflösen des Verweises, um das referenzierte Datenobjekt zu erhalten, ausgestaltet sein bzw. auch ein Auflösen des Verweises, insbesondere einen Zugriff auf eine Definitionsdatensammlung umfassen. Das Ermitteln von mindestens einer Codegenerierungseinstellung kann eine Validierung des Modells umfassen, wobei die Codegenerierung mit einer Fehlermeldung abgebrochen wird, wenn mindestens eine Plausibilitätsregel verletzt ist. Die ermittelte Codegenerierungseinstellung kann die Angabe eines zu verwendenden Datenobjekts wie einer Variablen und/oder einen Datentyp für ein im Code eingesetztes Datenobjekt bzw. eine verwendete Variable umfassen. Durch die Codegenerierungseinstellung können somit insbesondere im Quellcode definierte Variablen angepasst werden; dies kann auch die anwendbaren Optimierungen beeinflussen.

Wenn der hierarchische Block mehrere Kommunikationsblöcke umfasst, ist es vorteilhaft, dass jeder der Kommunikationsblöcke mit jeweils einem Verweis auf ein Datenobjekt versehen ist. Der hierarchische Block bzw. das Subsystem kann einen oder mehrere Eingabe-Ports und einen oder mehrere Ausgabe-Ports umfassen. Indem jeder der Blöcke auf ein Datenobjekt verweist, kann die Ein- und Ausgabe für das gesamte Subsystem angepasst werden.

In einer bevorzugten Ausführungsform der Erfindung ist das Datenobjekt ein Platzhalter, der nach der Codegenerierung bzw. Erzeugung von Quellcode definiert wird, insbesondere durch ein Präprozessormakro. Indem die Kommunikation über einen Platzhalter definiert wird, kann bei der inkrementellen Codegenerierung eine Anpassung erfolgen, ohne dass eine erneute Codegenerierung erforderlich ist. Hierbei ermöglicht es der Verweis, je nach Codegenerierungs-Modus oder Zielhardware angepasste Platzhalter zu verwenden.

Bevorzugt umfasst der hierarchische Block einen Funktionsblock, wobei in dem Funktionsblock ein Verweis auf eine Aufrufmodalität hinterlegt wird bzw. ist. Der Verweis kann auf ein Datenobjekt zur Definition einer Funktionssignatur zeigen, welches in einer Definitionsdatensammlung hinterlegt ist. Die Aufrufmodalitäten können eine Reihenfolge der Argumente und/oder eine Angabe darüber umfassen, ob das jeweilige Argument über eine Kopie des Werts (CallbyValue) oder einen Zeiger (CallbyReference) übergeben werden soll.

Besonders bevorzugt umfasst der hierarchische Block mindestens zwei Eingangsports und/oder mindestens zwei Ausgangsports, und die Aufrufmodalität umfasst eine Reihenfolge der Argumente und/oder ein Zusammenfassen der mindestens zwei Eingangsports und/oder der mindestens zwei Ausgangsports zu einer Struktur im erzeugten Quellcode. Der Verweis auf eine Aufrufmodalität kann verschiedene Formen aufweisen, insbesondere eine Definition einer Funktionssignatur mit Eingabeargument/en, Ausgabeargument/en und Rückgabewert.

In einer bevorzugten Ausführungsform der Erfindung zeigt der Verweis abhängig von einem Modus auf ein erstes oder ein zweites Datenobjekt, wobei ein Ersetzen des Verweises durch das erste Datenobjekt erfolgt, wenn ein erster Modus gewählt wurde, oder ein Ersetzen des Verweises durch das zweite Datenobjekt erfolgt, wenn ein zweiter Modus gewählt wurde. Dies ermöglicht eine Variantierung der Verweise. Zweckmäßigerweise ist ein Datenmodell einer Definitionsdatensammlung so definiert, dass auch eine Variantierung von Verweisen in Zusammenhang mit einer semantischen und/oder syntaktischen Validierung erfolgen kann. Die Wahl eines Modus kann beispielsweise über eine Bedienoberfläche empfangen werden.

Vorzugsweise gibt der Modus eine Codegenerierungsmodalität an, insbesondere Standard-Codegenerierung, Classic-AUTOSAR-Codegenerierung und/oder Adaptive-AUTOSAR-Codegenerierung. Codegenerierungsmodalitäten können sich hinsichtlich äußerer Formvorgaben unterscheiden. Beispielsweise kann aus einem hierarchischen Block in der Standard-Codegenerierung eine Funktion, in der Classic-AUTOSAR-Codegenerierung ein Runnable mit expliziter oder impliziter Kommunikation und in der Adaptive-AUTOSAR-Codegenerierung eine Adaptive Application mit Nutzung von Services erzeugt werden.

Es ist vorteilhaft, wenn der Kommunikationsblock auf mehr als ein Datenobjekt verweisen kann, insbesondere mindestens ein Verweis einen Port, ein Datenelement und/oder einen Kommunikationsmodus umfasst. Beispielsweise kann ein Ausgangsport in der Standard-Codegenerierung über eine globale Variable implementiert sein, während in der Classic-AUTOSAR-Codegenerierung eine explizite oder implizite Kommunikation über eine Laufzeitumgebung bzw. ein Runtime Environment (RTE) erfolgt. Beispielsweise können die Verweise unter Classic AUTOSAR einen Sender-/Receiver-Port und ein Datenelement umfassen; der Kommunikationsmodus kann z.B. ein Schreiben mittels expliziter oder impliziter Kommunikation über die RTE umfassen. Es kann auch vorgesehen sein, dass ein Verweis auf eine Access-Funktion erfolgt. In der Adaptive-AUTOSAR-Codegenerierung kann der Kommunikationsblocke als Zugriff auf einen Service implementiert sein.

Bevorzugt umfasst der hierarchische Block mindestens einen Berechnungsblock, der ein Eingangssignal empfängt und daraus ein Ausgangssignal berechnet, wobei der Berechnungsblock mit einem Verweis auf ein Datenobjekt versehen ist. Der Begriff Berechnung kann verschiedene Operationen umfassen, die mindestens ein Eingangssignal empfangen und daraus mindestens ein Ausgangssignal erzeugen. In diesem Sinne kann z.B. auch eine Verzögerung um einen Zeitschritt, wie sie ein Unit-Delay-Block ausführt, eine Berechnung darstellen. Der Berechnungsblock kann beispielsweise ein Gain-Block sein, der ein Eingangssignal mit einem vorgegebenen Faktor multipliziert. Der Faktor kann bei einer Standard-codegenerierung mittels einer Variablen bzw. einer Konstanten vorgegeben werden; bei einer AUTOSAR-Codegenerierung kann auf den Faktor über eine Access-Funktion zugegriffen werden. Die Verwendung von Platzhaltern ermöglicht neben einer Kalibrierung bzw. Anpassung des Faktors auch ein Loggen des aktuellen Werts.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem Verfahren nach einem der vorhergehenden Ansprüche,
c. Kompilieren des Quellcodes für die Recheneinheit, so dass ein ausführbarer Code erzeugt wird,
d. Übertragen des ausführbaren Codes auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine beispielhafte Ausführung eines Computersystems,
- Figur 2: eine schematische Darstellung der vorzugsweise auf einem Computersystem vorhandenen Softwarekomponenten,
- Figur 3: einen schematischen Ablaufplan einer Ausführungsform des erfindungsgemäßen Verfahrens zur Erzeugung von Quellcode,
- Figur 4: ein erstes Beispiel eines hierarchischen Blocks mit mehreren Kommunikationsblöcken,
- Figur 5: ein zweites Beispiel eines hierarchischen Blocks mit mehreren Kommunikationsblöcken, und
- Figur 6: eine bevorzugte Ausführungsform einer Benutzeroberfläche zum Bearbeiten von Verweisen.

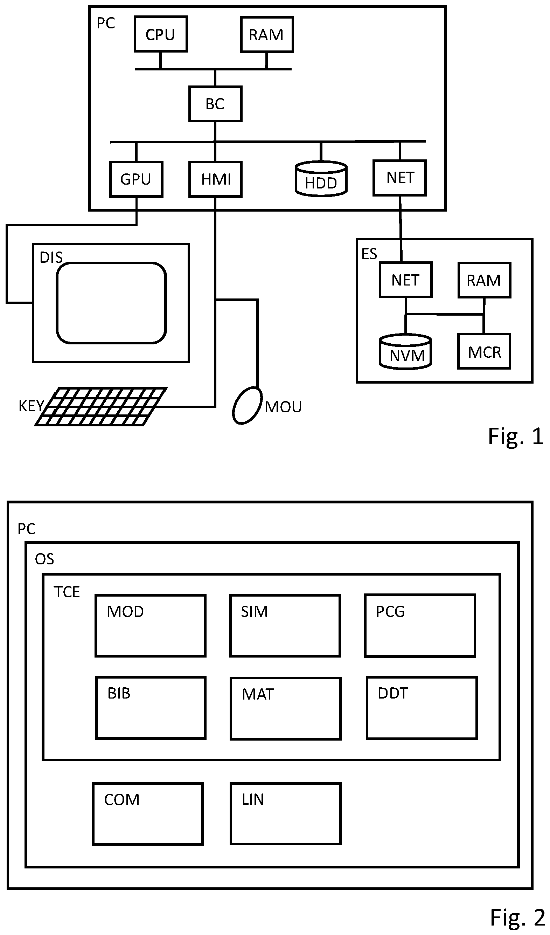

Figur 1 zeigt eine beispielhafte Ausführung eines Computersystems PC. Dieses weist einen Prozessor CPU, der insbesondere als Mehrkernprozessor realisiert sein kann, einen Arbeitsspeicher RAM und einen Buscontroller BC auf. Bevorzugt ist das Computersystem PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM.

In einer alternativen Ausführungsform kann das Computersystem einen oder mehrere Server umfassen, die ein oder mehrere Rechenelemente wie Prozessoren oder FPGAs umfassen, wobei die Server über ein Netzwerk mit einem Client verbunden sind, der eine Anzeigevorrichtung und Eingabegerät umfasst. Somit kann das Verfahren zur Erzeugung von Quellcode teilweise oder vollständig auf einem entfernten Server ausgeführt werden, beispielsweise in einem Cloud-Computing-Setup. Alternativ zu einem PC-Client kann eine grafische Benutzerschnittstelle auf einem tragbaren Computergerät angezeigt werden, insbesondere einem Tablet oder einem Smartphone.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Quellcode aus den Modellen. In einer Modellierumgebung MOD können vorzugsweise über eine graphische Benutzerschnittstelle Modelle eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben. Zumindest einige der Blöcke sind über Signale verbunden, also gerichtete Verbindungen zum Austausch von Daten, welche skalar oder zusammengesetzt sein können. Blöcke können atomar sein, also aus Sicht der umgebenden Blöcke eine Einheit bilden, bei der zu Beginn eines Rechenschritts alle Eingangssignale anliegen müssen und zu Ende eines Rechenschritts alle Ausgangssignale vorhanden sind. Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen. Solche zusammengesetzten bzw. hierarchischen Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren.

Die Rechenumgebung TCE umfasst eine oder mehrere Bibliotheken BIB, aus welcher Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems.

Aus einem erstellten Modell kann mit Hilfe eines Codegenerators PCG ein Quellcode bevorzugt in einer Programmiersprache wie C erzeugt werden. In einer Definitionsdatensammlung DDT werden zweckmäßigerweise zusätzliche Informationen zu dem Modell, insbesondere zu den Blockvariablen hinterlegt. Hierbei ist es vorteilhaft, wenn den Blockvariablen Codegenerierungseinstellungen wie Wertebereiche und/oder Skalierungen zugeordnet werden, um eine Berechnung des Modells mit Festkomma-Instruktionen zu unterstützen. Auch gewünschte Eigenschaften des Quellcodes, beispielsweise Konformität zu einem Standard wie MISRA, können als Codegenerierungseinstellungen in der Definitionsdatensammlung DDT hinterlegt werden.

Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Der Codegenerator PCG wertet vorzugsweise die Codegenerierungseinstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung DDT kann eine Programmschnittstelle und/oder Import-/Export-Funktionen aufweisen.

Das Computersystem PC weist einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

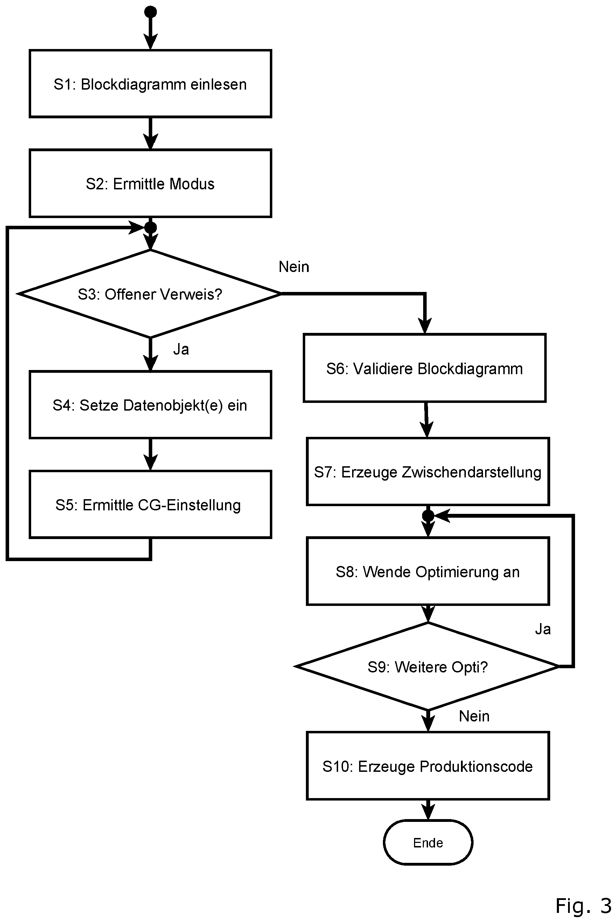

Figur 3 zeigt einen schematischen Ablaufplan einer Ausführungsform des erfindungsgemäßen Verfahrens zur Erzeugung von Quellcode. Das Verfahren kann vollständig von einem Prozessor einer beispielhaften Ausführung des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte zweckmäßigerweise auf den Servern durchgeführt werden.

In Schritt S1 (Blockdiagramm einlesen) wird ein Blockdiagramm eingelesen. Das Blockdiagramm umfasst mindestens einen hierarchischen Block und kann eine Vielzahl weiterer hierarchischer Blöcke enthalten. Zweckmäßigerweise umfasst das Einlesen des Blockdiagramms auch ein Auslesen mindestens einer Blockeigenschaft und/oder für die Codeerzeugung relevante Einstellungen, wie beispielsweise der Datentyp einer Variablen, aus der Definitionsdatensammlung DDT.

In Schritt S2 (Ermittle Modus) wird ein Modus ermittelt, der vorzugsweise eine Codegenerierungsmodalität angeben kann. Der Codegenerator kann insbesondere eine Standard-Codegenerierung, eine Classic-AUTOSAR-Codegenerierung und/oder eine Adaptive-AUTOSAR-Codegenerierung unterstützen. Je nach Modus wird dann zweckmäßigerweise Quellcode mit unterschiedlichen Eigenschaften erzeugt, um insbesondere die Konventionen verschiedener Softwareumgebungen wie einer AUTOSAR-Laufzeitumgebung einzuhalten. In alternativen Ausführungsformen der Erfindung kann es als weiterer Modus vorgesehen sein, aus dem Blockdiagramm Code in einer Hardwarebeschreibungssprache oder eine Konfiguration eines programmierbaren Hardwarebausteins zu generieren.

In Schritt S3 (Offener Verweis?) wird überprüft, ob es noch nicht aufgelöste Verweise in dem Blockdiagramm gibt. Beispielsweise kann der hierarchische Block einen Kommunikationsblock umfassen, der mit einem Verweis auf mindestens ein Datenobjekt versehen ist. In Abhängigkeit vom ermittelten Modus können unterschiedliche Datenobjekte referenziert sein. Auch die Anzahl referenzierter Datenobjekte kann je nach Modus variieren. Wenn es noch offene bzw. nicht aufgelöste Verweise gibt, so wird in Schritt S4 (Setze Datenobjekt(e) ein) das oder die Datenobjekt/e eingesetzt, welche der aktuelle Verweis im ermittelten Modus referenziert. Dann wird in Schritt S5 (Ermittle CG-Einstellung) anhand des mindestens einen eingesetzten Datenobjekts eine Codegenerierungseinstellung ermittelt. Beispielsweise kann das Datenobjekt eine Variable sein, deren Datentyp anhand einer in der Definitionsdatensammlung zugeordneten Variablenklasse ermittelt wird.

Sobald keine offenen Verweise mehr vorliegen, wird in Schritt S6 (Validiere Blockdiagramm) das Blockdiagramm validiert. Hierbei kann für eine Vielzahl von vorgegebenen Bedingungen überprüft werden, ob diese erfüllt sind. Beispielsweise kann bei dem hierarchischen Block überprüft werden, ob dieser einen Port umfasst, der noch keine Signalverbindung aufweist. Zweckmäßigerweise kann es vorgesehen sein, dass die Codegenerierung mit einer Fehlermeldung abgebrochen wird, wenn mindestens eine der vorgegebenen Bedingungen nicht erfüllt ist. Somit wird insbesondere die Erzeugung falschen Codes aufgrund von offensichtlichen Modellierungsfehlern vermieden.

In Schritt S7 (Erzeuge Zwischendarstellung) wird das gewählte Modell aus einem oder mehreren Blöcken des Blockdiagramms BLD in eine Zwischendarstellung IR transformiert, die vorzugsweise einen oder mehrere hierarchische Graphen umfasst. Hierbei kann es sich insbesondere um einen Datenflussgraph, einen Kontrollflussgraph oder eine Baumstruktur handeln. Neben dem Blockdiagramm BLD werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden.

In Schritt S8 (Wende Optimierung an) werden die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Die anzuwendenden Optimierungsregeln können in der Definitionsdatensammlung hinterlegt sein und/oder einem voreingestellten Standardablauf folgen.

In Schritt S9 (Weitere Opti?) wird überprüft, ob eine weitere Optimierungsregel anzuwenden ist. Bei der Optimierung können verschiedene Strategien bzw. Optimierungsregeln wie "Constant folding" oder eine Eliminierung von "Dead Code" angewandt werden. Wenn mindestens eine Optimierungsregel noch nicht angewendet wurde oder ein weiteres Mal angewendet werden soll, so wird Schritt S8 wiederholt. Andernfalls wird die Durchführung in Schritt S10 fortgesetzt. Es kann auch vorgesehen sein, einzelne Optimierungen bereits im Rahmen der Transformation von Schritt S7 anzuwenden, insbesondere wenn diese auf einer Blockdiagrammdarstellung einfacher durchgeführt werden können. Im Rahmen der Erfindung ist es prinzipiell sowohl möglich, dass mehrere in Schritt S7 erzeugte Variablen in Schritt S8 zusammengefasst werden, als auch dass in Schritt S7 mehrere Variable des Blockdiagramms derart zusammengefasst werden, dass bereits die erste Zwischendarstellung nur noch eine Variable enthält.

In Schritt S10 (Erzeuge Produktionsvode) werden die optimierte Zwischendarstellung IR bzw. die optimierten hierarchischen Graphen, welche aus den gesamten durchgeführten Zwischenschritten resultieren, in Quellcode PCO einer textuellen Programmiersprache, wie insbesondere C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms, zu erzeugen und insbesondere in Form von Kommentaren in den Quellcode einzubinden, um die Lesbarkeit des Quellcodes PCO zu verbessern und/oder ein Debugging zu vereinfachen.

Während oder nach der Codegenerierung können Informationen über das aktuelle Blockdiagramm oder Ergebnisse der Codegenerierung, wie beispielsweise Warnungen, in der Definitionsdatensammlung gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht für eine Laufzeitumgebung nach dem AUTOSAR-Standard.

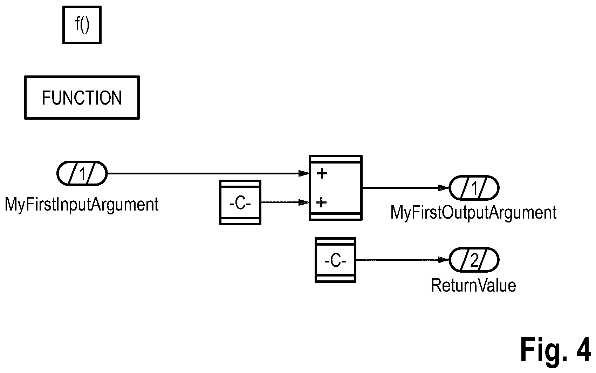

Fig. 4 zeigt ein erstes Beispiel eines hierarchischen Blocks mit mehreren Kommunikationsblöcken, wobei die untergeordneten Blöcke dargestellt sind, welche die Funktionalität des hierarchischen Blocks implementieren. Ein erster Kommunikationsblock, ein Eingangsport, empfängt ein Signal MyFirstInputArgument. In einem Summenblock wird zu dem Eingangssignal ein konstanter Wert C addiert. Ein zweiter Kommunikationsblock, ein Ausgangsport, gibt den resultierenden Summenwert als Signal MyFirstOutputArgument aus. Über einen dritten Kommunikationsblock, einen weiteren Ausgangsport, wird ein konstanter Wert als Signal ReturnValue ausgegeben. Mittels eines Funktionsblocks, FUNCTION, können Eigenschaften des hierarchischen Blocks eingestellt werden; die Eigenschaften können je nach Modus variieren. Die Eigenschaften können eine Anzahl und Reihenfolge von Argumenten sowie Aufrufmodalitäten wie CallbyValue oder CallbyReference, also die Erzeugung einer Kopie des jeweiligen Arguments oder die Übergabe eines Zeigers auf das jeweilige Argument umfassen.

Beispielsweise kann für den Standard-Codegenerierungsmodus die Erzeugung einer Funktion MyServerFunction gewählt werden, welche zwei Argumente aufweist, einen skalaren Eingangswert und einen Zeiger auf einen skalaren Ausgangswert, und einen skalaren Rückgabewert aufweist. Für die Argumente können unterschiedliche Variablenklassen gewählt werden, so dass die entsprechenden Variablen unterschiedliche Datentypen aufweisen können und in unterschiedlichen Speicherbereichen angeordnet sein können. Es kann auch eine Skalierung für das jeweilige Argument angegeben sein. Listing 1 zeigt den aus dem hierarchischen Block von Figur 4 in einem Standard-Codegenerierungs-Modus erzeugten Quellcode:

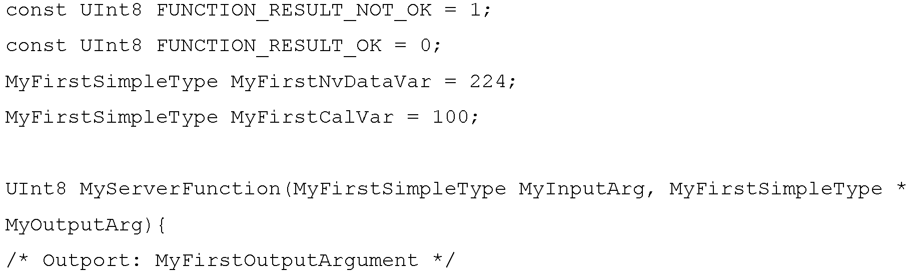

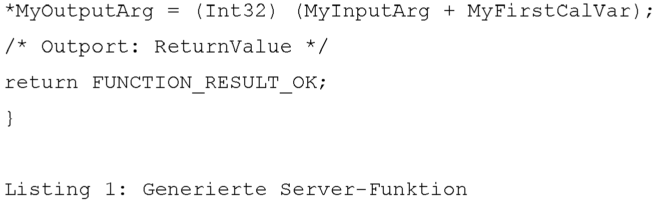

Für den Classic-AUTOSAR-Codegenerierungsmodus kann die Erzeugung eines Server-Runnables mit den entsprechenden Argumenten eingestellt werden. Die Reihenfolge der Argumente, der Datentyp oder auch die Aufrufmodalität eines oder mehrerer Argumente können für diesen Modus abweichend vom Standard-Modus eingestellt werden. Listing 2 zeigt den aus dem hierarchischen Block von Figur 4 in einem Classic-AUTOSAR-Codegenerierungs-Modus erzeugten Quellcode:

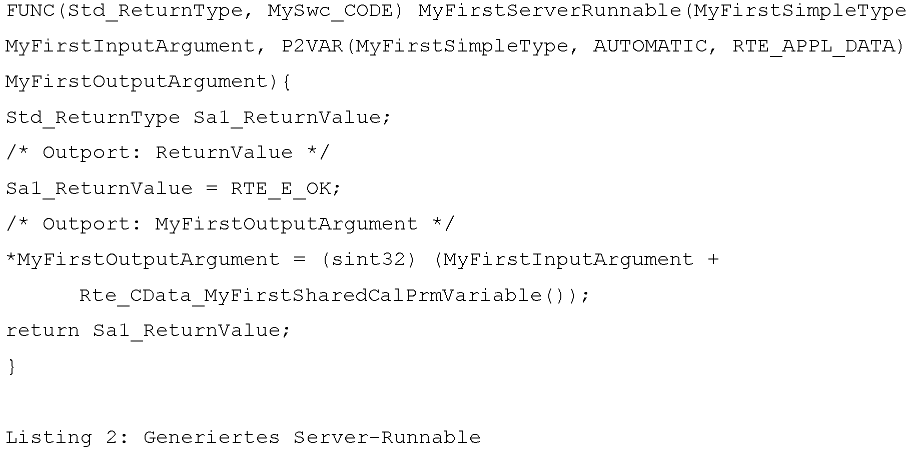

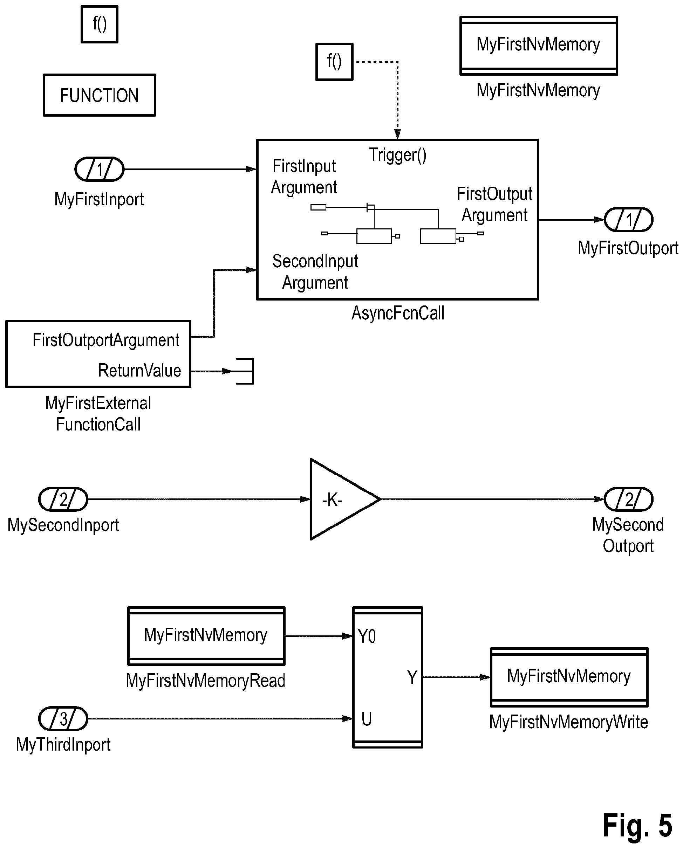

In Figur 5 ist ein zweites Beispiel eines hierarchischen Blocks mit mehreren Kommunikationsblöcken dargestellt, wobei die untergeordneten Blöcke dargestellt sind, welche die Funktionalität des hierarchischen Blocks bzw. Subsystems implementieren.

Über drei Eingangsports, MyFirstInport, MySecondInport, und MyThirdInport, können Eingangssignale von außen empfangen werden. Weiterhin weist das Subsystem eine Speichervariable MyFirstNvMemory, auf die mittels des Lese-Blocks MyFirstNvMemoryRead und des Schreib-Blocks MyFirstNvMemoryWrite zugegriffen wird. Über zwei Ausgangsports, MyFirstOutport und MySecondOutport, werden die berechneten Ausgangssignale ausgegeben. Das Subsystem umfasst ferner einen Aufruf einer externen Funktion, MyFirstExternalFunctionCall, welche ein Ausgangssignal und einen Rückgabewert liefert. Das Ausgangssignal dient als Eingangssignal SecondInputArgument eines untergeordneten Subsystems Async_Fcn_Call. Dieses Subsystem wird zyklisch von einem Function Call Generator getriggert. Aus dem zweiten Eingangssignal wird über einen Multiplikationsblock K das zweite Ausgangssignal MySecondOutport berechnet. Das dritte Eingangssignal MyThirdInport wird über einen Zuweisungsblock der Datenspeichervariablen zugewiesen.

Mittels eines Funktionsblocks FUNCTION können die Reihenfolge der Argumente, der Datentyp oder auch die Aufrufmodalität eines oder mehrerer Argumente angepasst werden. Auch kann es vorgesehen sein, mehrere Argumente in eine Struktur zusammenzufassen, und nur diese zu übergeben. Listing 3 zeigt den aus dem hierarchischen Block von Figur 5 in einem Standard-Codegenerierungs-Modus erzeugten Quellcode:

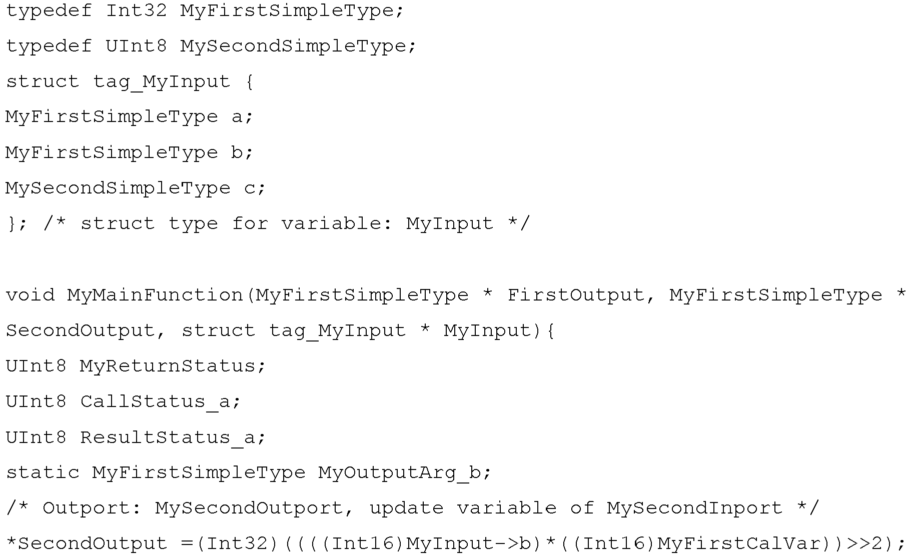

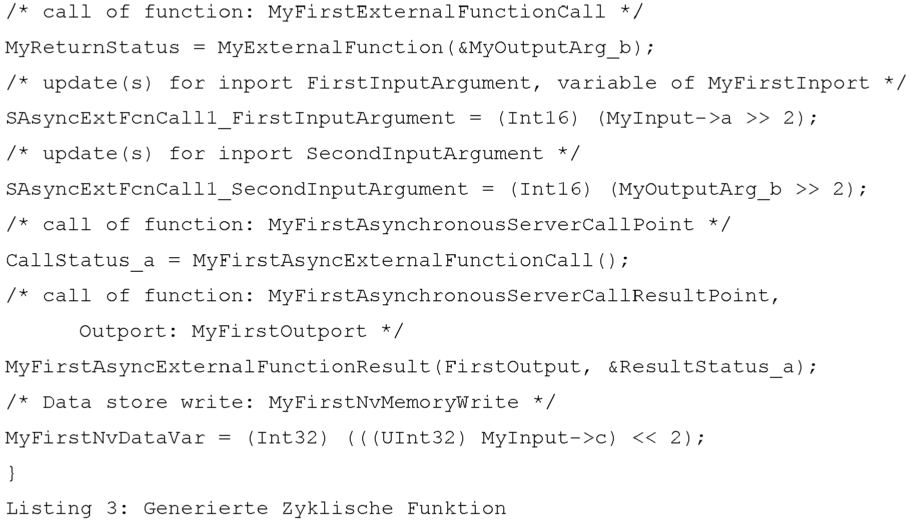

Durch die Definition des Datentyps tag_My_Input können mehrere Variablen über eine gemeinsame Struktur übergeben werden.

Listing 4 zeigt den aus dem hierarchischen Block von Figur 5 in einem Classic-AUTOSAR-Codegenerierungs-Modus erzeugten Quellcode:

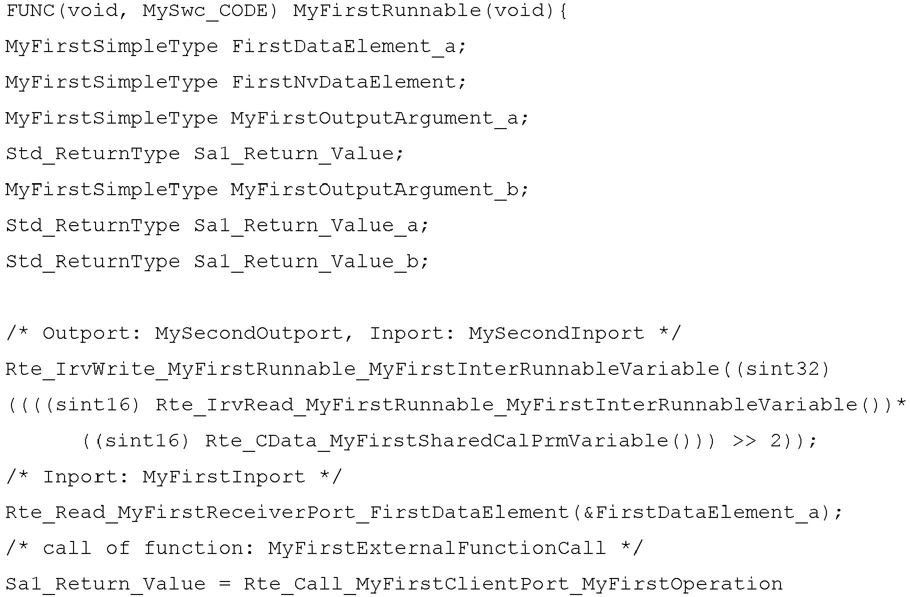

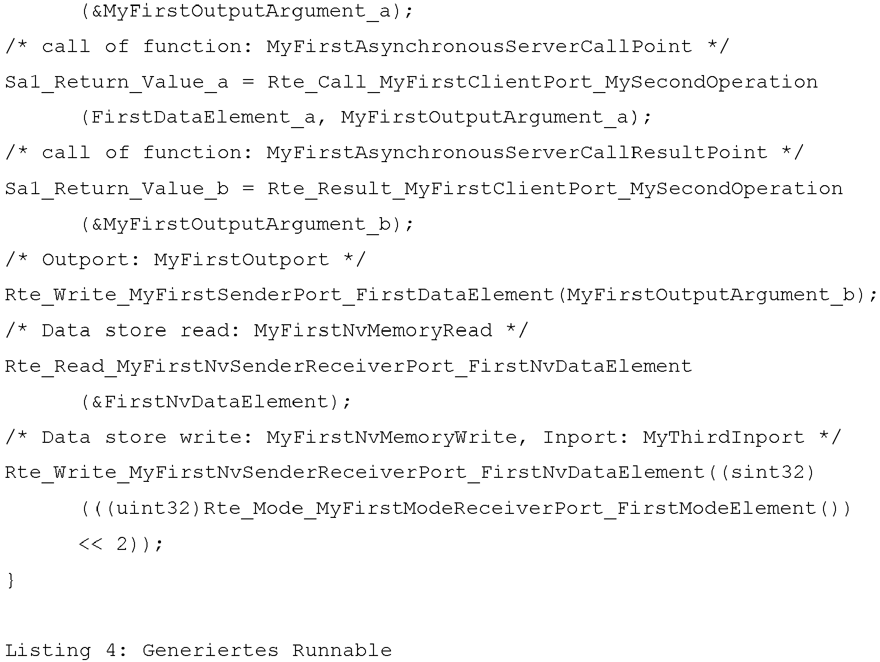

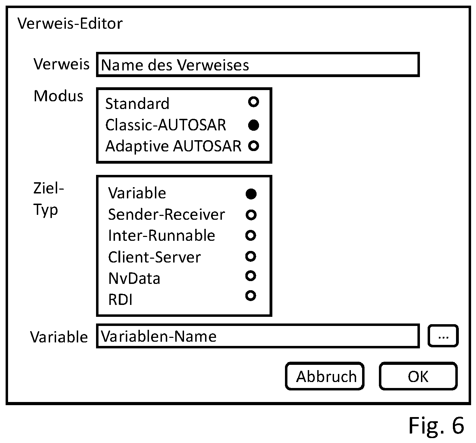

Figur 6 zeigt eine bevorzugte Ausführungsform einer Benutzeroberfläche zum Bearbeiten von Verweisen. Das Fenster Verweis-Editor kann insbesondere über das Kontext-Menü eines Kommunikationsblocks geöffnet werden.

In einem Feld Verweis kann der Nutzer einen Namen des zu bearbeitenden Verweises angeben. Der Name des Verweises kann auch den Namen übergeordneter Subsysteme bzw. hierarchischer Blöcke umfassen, wenn sich der entsprechende Kommunikationsblock in einer untergeordneten Hierarchieebene des Blockdiagramms befindet. In den weiteren Feldern können Eigenschaften des angegebenen Verweises vom Nutzer angepasst werden. Da die Eigenschaften in Abhängigkeit vom Codegenerierungsmodus variieren können, gibt der Nutzer zweckmäßigerweise im Feld Modus den Codegenerierungsmodus an, für welchen der Verweis bearbeitet werden soll. Dargestellt ist eine Liste mit drei Elementen Standard, Classic-AUTOSAR und Adaptive AUTOSAR, wobei der Modus Classic-AUTOSAR ausgewählt ist. Für die Auswahl können verschiedene an sich bekannte Bedienelemente wie eine Drop-Down-Liste oder Checkboxen verwendet werden.

In einem Feld Ziel-Typ kann der Nutzer verschiedene Arten von Verweisen auswählen, welche sich auch in der Anzahl von referenzierten Datenobjekten unterscheiden. Die dargestellte List umfasst sechs Elemente, Variable, Sender-Receiver, Inter-Runnable, Client-Server, NvData und RDI. Es kann vorgesehen sein, dass die auswählbaren Elemente der Liste vom angegebenen Modus abhängig sind. Ein Verweis vom Typ Variable kann eine Variable und damit indirekt auch deren zugeordneten Datentyp referenzieren. Prinzipiell ist dieser Verweis universell verwendbar und kann auch in Berechnungsblöcken referenziert werden. Dadurch ist es insbesondere möglich, die zeitabhängig veränderlichen Werte einer Blockvariable des Berechnungsblocks zu loggen, also aufzuzeichnen, oder die Blockvariable zu kalibrieren, also deren Wert zu ändern. Ein Verweis vom Typ Sender-Receiver ermöglicht es, an einem Eingangs- oder Ausgangsport eine unter Classic-AUTOSAR übliche Sender-Receiver-Kommunikation zu spezifizieren und umfasst mehrere Datenobjekte. Ein Verweis vom Typ Inter-Runnable ermöglicht es unter Classic-AUTOSAR, einen Datenaustausch über eine Inter-Runnable-Variable zu spezifizieren. Ein Verweis vom Typ Client-Server ermöglicht es, an einem Eingangs- oder Ausgangsport eine unter Classic-AUTOSAR übliche Client-Server-Kommunikation zu spezifizieren und umfasst mehrere Datenobjekte. Ein Verweis vom Typ NvData kann das Schreiben auf einen nichtflüchtigen Flash-Speicher spezifizieren. Ein Verweis vom Typ RDI stellt einen Platzhalter dar, welcher nach der Codegenerierung insbesondere durch ein Präprozessor-Makro definiert wird. Neben den beispielhaft genannten Typen von Verweisen können auch weitere Typen in der Benutzeroberfläche angeboten bzw. bearbeitet werden. Für die Auswahl eines Typs können verschiedene an sich bekannte Bedienelemente wie eine Drop-Down-Liste oder Checkboxen verwendet werden.

In der dargestellten Benutzeroberfläche ist ein Verweis vom Typ Variable ausgewählt. Deshalb wird unterhalb der Liste von Typen ein Feld Variable angezeigt, in dem ein Variablen-Name angegeben werden kann. Neben einem Textfeld können verschiedene an sich bekannte Bedienelemente eingesetzt werden. Wird ein anderer Typ von Verweis ausgewählt, so werden zweckmäßigerweise das oder die für diesen Typ relevante Feld dargestellt.

Nachdem die Eigenschaften des Verweises vom Nutzer empfangen wurden, hinterlegt das Computersystem diese zweckmäßigerweise in einer dem Blockdiagramm zugeordneten Definitionsdatensammlung. Somit können die Änderungen bei der nächsten Codegenerierung berücksichtigt werden.

Ein erfindungsgemäßes Verfahren ermöglicht die Modellierung universeller hierarchischer Blöcke, für die je nach Codegenerierungsmodus angepasster Code erzeugt wird. Hierbei werden eine Vielzahl verschiedener Arten des Datenaustauschs unterstützt, sei es die Kommunikation über eine Laufzeitumgebung oder die Verwendung einer Variablen. Dies erhöht die Wiederverwendbarkeit einmal erstellter hierarchischer Blöcke und beschleunigt somit die Entwicklung von Steuergeräten.

## Patentansprüche

1. Verfahren zum Erzeugen von Quellcode aus mindestens einem hierarchischen Block eines Blockdiagramms, wobei ein hierarchischer Block eine Vielzahl von untergeordneten Blöcken umfasst, welche Berechnungen des hierarchischen Blocks implementieren, wobei der hierarchische Block mindestens einen Kommunikationsblock umfasst, der Daten mit einem Block außerhalb des hierarchischen Blocks austauscht, wobei der mindestens eine Kommunikationsblock mit einem Verweis auf ein Datenobjekt versehen ist, das Verfahren umfassend
Einlesen des Blockdiagramms (S1),
Ersetzen des Verweises (S4) durch das Datenobjekt, welches der Verweis referenziert,
Ermitteln von mindestens einer Codegenerierungseinstellung (S5) anhand des Datenobjekts, wobei die Codegenerierungseinstellung die Angabe eines im Code zu verwendenden Datenobjekts und/oder die Angabe eines Datentyps für ein im Code verwendetes Datenobjekt umfasst,
Erzeugen einer Zwischendarstellung (S7),
Durchführen mindestens einer Optimierung (S8) auf der Zwischendarstellung, und
Übersetzen der Zwischendarstellung in Quellcode (S10).

2. Verfahren nach Anspruch 1, wobei der hierarchische Block mehrere Kommunikationsblöcke (MyFirstInport, MySecondInport, MyThirdInport, MyFirstNvMemoryRead, MyFirstOutport, MySecondOutport, MyfirstNvMemoryWrite) umfasst, und wobei jeder der Kommunikationsblöcke (MyFirstInport, MySecondInport, MyThirdInport, MyFirstNvMemoryRead, MyFirstOutport, MySecondOutport, MyfirstNvMemoryWrite) mit jeweils einem Verweis auf ein Datenobjekt versehen ist.

3. Verfahren nach einem der vorhergehenden Ansprüche, wobei das Datenobjekt ein Platzhalter ist, der nach der Erzeugung von Quellcode definiert wird, insbesondere durch ein Präprozessormakro.

4. Verfahren nach einem der vorhergehenden Ansprüche, wobei der hierarchische Block einen Funktionsblock (FUNCTION) umfasst, wobei in dem Funktionsblock (FUNCTION) ein Verweis auf eine Aufrufmodalität hinterlegt wird.

5. Verfahren nach Anspruch 4, wobei der hierarchische Block mindestens zwei Eingangsports (MyFirstInport, MySecondInport, MyThirdInport) und/oder mindestens zwei Ausgangsports (MyFirstOutport, MySecondOutport) umfasst, und wobei die Aufrufmodalität eine Reihenfolge der Argumente und/oder ein Zusammenfassen der mindestens zwei Eingangsports (MyFirstInport, MySecondInport, MyThirdInport) und/oder der mindestens zwei Ausgangsports (MyFirstOutport, MySecondOutport) zu einer Struktur im erzeugten Quellcode umfasst.

6. Verfahren nach einem der vorhergehenden Ansprüche, wobei der Verweis abhängig von einem Modus auf ein erstes oder ein zweites Datenobjekt zeigt, und wobei ein Ersetzen des Verweises durch das erste Datenobjekt erfolgt, wenn ein erster Modus gewählt wurde, oder ein Ersetzen des Verweises durch das zweite Datenobjekt erfolgt, wenn ein zweiter Modus gewählt wurde.

7. Verfahren nach Anspruch 6, wobei der Modus eine Codegenerierungsmodalität angibt, insbesondere Standard-Codegenerierung, Classic-AUTOSAR-Codegenerierung und/oder Adaptive-AUTOSAR-Codegenerierung.

8. Verfahren nach einem der vorhergehenden Ansprüche, wobei der Kommunikationsblock auf mehr als ein Datenobjekt verweisen kann, insbesondere mindestens ein Verweis einen Port, ein Datenelement und/oder einen Kommunikationsmodus umfasst.

9. Verfahren nach einem der vorhergehenden Ansprüche, wobei der hierarchische Block mindestens einen Berechnungsblock umfasst, der ein Eingangssignal empfängt und daraus ein Ausgangssignal berechnet, und wobei der Berechnungsblock mit einem Verweis auf ein Datenobjekt versehen ist.

10. Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Erzeugen eines Quellcodes mit einem Verfahren nach einem der vorhergehenden Ansprüche,
b. Kompilieren des Quellcodes für die Recheneinheit, so dass ein ausführbarer Code erzeugt wird,
c. Übertragen des ausführbaren Codes auf das Steuergerät, und
d. Hinterlegen des ausführbaren Codes auf einem nichtflüchtigen Speicher des Steuergeräts und/oder Ausführen des ausführbaren Codes durch die Recheneinheit des Steuergeräts.

11. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

12. Computersystem umfassend eine Mensch-Maschine-Schnittstelle, einen nichtflüchtigen Speicher und einen Prozessor, wobei der Prozessor dazu eingerichtet ist, ein Verfahren nach einem der vorhergehenden Ansprüche 1-10 auszuführen.

## Claims

1. A method for generating source code from at least one hierarchical block of a block diagram, a hierarchical block comprising a plurality of subordinate blocks for implementing calculations of the hierarchical block, the hierarchical block comprising at least one communication block for exchanging data with a block outside the hierarchical block, the at least one communication block being provided with a reference to a data object, the method comprising
reading in the block diagram (S1),
replacing the reference (S4) with the data object referenced by the reference,
determining at least one code generation setting (S5) using the data object, wherein the code generation setting comprises specifying a data object to be used in the code and/or specifying a data type for a data object used in the code,
generating an intermediate representation (S7),
performing at least one optimization (S8) on the intermediate representation, and
translating the intermediate representation into source code (S10).

2. The method according to claim 1, wherein the hierarchical block comprises a plurality of communication blocks (MyFirstInport, MySecondInport, MyThirdInport, MyFirstNvMemoryRead, MyFirstOutport, MySecondOutport, MyfirstNvMemoryWrite), and wherein each of the communication blocks (MyFirstInport, MySecondInport, MyThirdInport, MyFirstNvMemoryRead, MyFirstOutport, MySecondOutport, MyfirstNvMemoryWrite) is provided with a reference to a data object.

3. The method according to any one of the preceding claims, wherein the data object is a placeholder that is defined after the generation of source code, in particular by a preprocessor macro.

4. The method according to any one of the preceding claims, wherein the hierarchical block comprises a function block (FUNCTION), wherein a reference to a calling modality is stored in the function block (FUNCTION).

5. The method according to claim 4, wherein the hierarchical block comprises at least two input ports (MyFirstInport, MySecondInport, MyThirdInport) and/or at least two output ports (MyFirstOutport, MySecondOutport), and wherein the calling modality comprises a sequence of the arguments and/or a combination of the at least two input ports (MyFirstInport, MySecondInport, MyThirdInport) and/or of the at least two output ports (MyFirstOutport, MySecondOutport) to form a structure in the generated source code.

6. The method according to any one of the preceding claims, wherein the reference points to a first or a second data object depending on a mode, and wherein a replacement of the reference by the first data object takes place if a first mode has been selected, or a replacement of the reference by the second data object takes place if a second mode has been selected.

7. The method according to claim 6, wherein the mode indicates a code generation modality, in particular standard code generation, classic AUTOSAR code generation, and/or adaptive AUTOSAR code generation.

8. The method according to any one of the preceding claims, wherein the communication block may refer to more than one data object, in particular at least one reference comprises a port, a data element, and/or a communication mode.

9. The method according to any one of the preceding claims, wherein the hierarchical block comprises at least one calculation block for receiving an input signal and calculating an output signal therefrom, and wherein the calculation block is provided with a reference to a data object.

10. A method for configuring a control device, the control device comprising at least one processing unit and preferably comprising at least one sensor and/or at least one actuator for capturing data of a physical process and/or for acting on the same, the method comprising the steps
a. generating a source code by means of a method according to any one of the preceding claims,
b. compiling the source code for the processing unit so that an executable code is generated,
c. transferring the executable code to the control device, and
d. storing the executable code in a non-volatile memory of the control device and/or executing the executable code by means of the processing unit of the control device.

11. A computer program product having a computer-readable memory medium in which commands are embedded for causing, when executed by a processor, the processor to be configured for executing a method according to any one of the preceding claims.

12. A computer system comprising a human-machine interface, a non-volatile memory, and a processor, wherein the processor is configured for executing a method according to any one of the preceding claims 1-10.

## Revendications

1. Procédé de génération de code source à partir d'au moins un bloc hiérarchique d'un programme en blocs, un bloc hiérarchique comprenant une pluralité de blocs subordonnés qui mettent en œuvre des calculs du bloc hiérarchique, le bloc hiérarchique comprenant au moins un bloc de communication qui échange des données avec un bloc à l'extérieur du bloc hiérarchique, l'au moins un bloc de communication étant pourvu d'une référence à un objet de données, le procédé comprenant
Lecture du programme en blocs (S1),
Remplacement de la référence (S4) par l'objet de données auquel la référence fait référence,
Détermination d'au moins un réglage de génération de code (S5) à l'aide de l'objet de données, le réglage de génération de code comprenant l'indication d'un objet de données à utiliser dans le code et/ou l'indication d'un type de données pour un objet de données utilisé dans le code,
Génération d'une représentation intermédiaire (S7),
Exécution d'au moins une optimisation (S8) sur la représentation intermédiaire, et
Traduction de la représentation intermédiaire en code source (S10).

2. Procédé selon la revendication 1, le bloc hiérarchique comprenant plusieurs blocs de communication (MyFirstInport, MySecondInport, MyThirdInport, MyFirstNvMemoryRead, MyFirstOutport, MySecondOutport, MyfirstNvMemoryWrite), et chacun des blocs de communication (MyFirstInport, MySecondInport, MyThirdInport, MyFirstNvMemoryRead, MyFirstOutport, MySecondOutport, MyfirstNvMemoryWrite) étant respectivement pourvu d'une référence à un objet de données.

3. Procédé selon l'une des revendications précédentes, l'objet de données étant un caractère de substitution qui est défini après la génération du code source, en particulier par une macro préprocesseur.

4. Procédé selon l'une des revendications précédentes, le bloc hiérarchique comprenant un bloc fonctionnel (FUNCTION), une référence à une modalité d'appel étant stockée dans le bloc fonctionnel (FUNCTION).

5. Procédé selon la revendication 4, le bloc hiérarchique comprenant au moins deux ports d'entrée (MyFirstInport, MySecondInport, MyThirdInport) et/ou au moins deux ports de sortie (MyFirstOutport, MySecondOutport), et la modalité d'appel comprenant une séquence des arguments et/ou un regroupement des au moins deux ports d'entrée (MyFirstInport, MySecondInport, MyThirdInport) et/ou des au moins deux ports de sortie (MyFirstOutport, MySecondOutport) en une structure dans le code source généré.

6. Procédé selon l'une des revendications précédentes, la référence pointant vers un premier ou un deuxième objet de données, en fonction d'un mode, et un remplacement de la référence par le premier objet de données étant effectué si un premier mode a été sélectionné, ou un remplacement de la référence par le deuxième objet de données étant effectué si un deuxième mode a été sélectionné.

7. Procédé selon la revendication 6, le mode indiquant une modalité de génération de code, notamment la génération de code Standard, la génération de code Classic AUTOSAR et/ou la génération de code Adaptative AUTOSAR.

8. Procédé selon l'une des revendications précédentes, le bloc de communication pouvant faire référence à plus d'un objet de données, en particulier au moins une référence comprenant un port, un élément de données et/ou un mode de communication.

9. Procédé selon l'une des revendications précédentes, le bloc hiérarchique comprenant au moins un bloc de calcul qui reçoit un signal d'entrée et, à partir de celui-ci, calcule un signal de sortie, et le bloc de calcul étant pourvu d'une référence à un objet de données.

10. Procédé pour configurer un appareil de commande, l'appareil de commande comprenant au moins une unité de calcul et possédant de préférence au moins un capteur et/ou au moins un actionneur, afin d'acquérir des données d'un processus physique et/ou d'agir sur celui-ci, le procédé comprenant les étapes suivantes :
a. génération d'un code source à l'aide d'un procédé selon l'une des revendications précédentes,
b. compilation du code source pour l'unité de calcul, de manière à générer un code exécutable,
c. transfert du code exécutable à l'appareil de commande, et
d. stockage du code exécutable dans une mémoire non volatile de l'appareil de commande et/ou exécution du code exécutable par l'unité de calcul de l'appareil de commande.

11. Produit de programme informatique comprenant un support de stockage lisible par ordinateur sur lequel sont incorporées des instructions qui, lorsqu'elles sont exécutées par un processeur, font à ce que le processeur soit configuré pour mettre en œuvre un procédé selon l'une des revendications précédentes.

12. Système informatique comprenant une interface homme-machine, une mémoire non volatile et un processeur, le processeur étant configuré pour mettre en œuvre un procédé selon l'une des revendications 1-10 précédentes.
